# EUROPÄISCHE PATENTANMELDUNG

(11) **EP 4 455 243 A1**
(43) Veröffentlichungstag der Anmeldung: **30.10.2024**
(21) Anmeldenummer: 24169304.3
(22) Anmeldetag: 09.04.2024
(51) Int. Cl.: C09J 123/28, C08G 18/10, C08G 18/48, C08G 18/73, C08G 18/78, C08G 18/79

(54) **2-KOMPONENTEN-HAFTPRIMER ZUR KOMBINATION MIT FLÜSSIGKUNSTSTOFFEN**

(30) Priorität: 27.04.2023 DE 102023110890
(71) Anmelder: FRANKEN SYSTEMS GmbH, 97258 Gollhofen (DE)
(72) Erfinder: Luckert, Sven, 97320 Sulzfeld (DE); Schobben, Christian, 48268 Greven (DE); Schäfer, Julian, 97204 Höchberg (DE); Klee, Petra, 97318 Kitzingen (DE)
(74) Vertreter: Gleim, Christian Ragnar

(57) **Zusammenfassung**

2-Komponenten-Haftprimer zur Kombination mit Flüssigkunststoffen im Baubereich enthaltend mindestens
A1) mindestens ein freie Isocyanatgruppen aufweisendes Prepolymer mit einem Gehalt an aliphatisch gebundenen NCO-Gruppen von 7,0 bis 18 Gew. -%, erhältlich durch Umsetzung von aliphatischen Di- oder Polyisocyanaten mit mindestens einem durch Alkoxylierung hydroxyfunktioneller Startermoleküle erhältlichen Polyoxyalkylenpolyol mit einer mittleren Hydroxyfunktionalität von 1,5 bis 4 und einem Äquivalentgewicht von mindestens 400 g/Mol
A2) mindestens ein chloriertes Polyolefin -CPO- mit einem Chlorgehalt von 10 bis 45 Gew% bezogen auf das Gesamtgewicht CPO
A3) mindestens ein organisches Lösungsmittel enthaltend aromatische Kohlenwasserstoffe und/oder Ester.

## Beschreibung

Reaktive Flüssigkunststoffe werden in zunehmender Menge bei der Bauwerksabdichtung eingesetzt. Bevorzugte Einsatzgebiete sind die Abdichtung von Flachdächern, Balkonen und Terrassen, die Abdichtung erdberührter Bauteile und in zunehmenden Ausmaß auch der Anschluss von Fenstern und Türen. Die vermehrte Verwendung oder Mitverwendung von Recycling-Kunststoffen stellt dabei eine zusätzliche Herausforderung dar. Grundsätzlich ist das Eigenschaftsprofil geeigneter polymerer Abdichtungsmaterialien in der EOTA-Leitlinie ETAG Nr. 005 (Leitlinie für die europäische Technische Zulassung für flüssig aufzubringende Dachabdichtungen) im Detail spezifiziert.

Marktübliche Flüssigkunststoffe basieren typischerweise auf ungesättigten Polyestern, Polyurethanen oder ungesättigten Acrylatcopolymeren. Als reaktive Flüssigkunststoffe können darüber hinaus 1-komponentige feuchtigkeitshärtende Abdichtungsmassen auf Basis von silanterminierten Polymeren besonders vorteilhaft in der Bauwerksabdichtung eingesetzt werden. Entsprechende Produkte zeichnen sich durch eine einfache Verarbeitbarkeit, gute mechanische Eigenschaften sowie toxikologische Unbedenklichkeit aus. Aufgrund der ausgezeichneten Haftung zu nahezu allen Untergründen des Baubereiches werden diese Produkte besonders vorteilhaft als Detailabdichtung in Anschlussbereichen zu polymeren oder bituminösen Abdichtungsbahnen- oder -Folien eingesetzt. Auf dieser Technologie basierende Materialien und ihre Verwendung als Abdichtungsmaterialien für Dachbeschichtungen sind z. B. aus EP 1 987 108 A, EP 2 352 776 A und EP 2 561 024 A sowie der WO 2019 114990 A1 bekannt.

Für eine dauerhafte Dichtigkeit der ausgehärteten Massen ist die Haftung zum Untergrund von entscheidender Bedeutung. In Bezug auf die Haftung auf mineralischen und bituminösen Untergründen genügen die marktüblichen Flüssigkunststoffe den Anforderungen an eine ausreichende und dauerhafte Haftung zum Untergrund. Problematisch ist aber vielfach die Haftung auf Kunststoffen, wie sie in zunehmendem Ausmaß im Baubereich verwendet werden. Als häufig verwendete Kunststoffe im Baubereich seien in diesem Zusammenhang genannt: Polyvinylchlorid (PVC)-Kunststoffe, flexibilisierte Polyolefinkunststoffe (FPO, TPO), elastomere Kunststoffe wie EPDM, NBR, CSM oder TPE, sowie Kunststoffprofile aus PVC, ABS, PP, PC, PMMA oder TPU. Die genannten Kunstststoffe werden dabei aber nur äußerst selten in reiner Form eingesetzt, sondern meistens als Formulierung, die Füllstoffe, Additive, Farbmittel, Weichmacher, Extrusionshilfsmittel, Alterungsschutzmittel sowie weitere Additive beinhaltet. Diese Ausführungen verdeutlichen, dass die Erzielung einer ausreichenden Haftung eines Flüssigkunststoffs auf der Vielzahl an formulierten Baukunststoffen ausgesprochen schwierig ist und in der Regel die Anwendung von Zwischenanstrichen als Haftprimer erfordert. Die vermehrte Verwendung von Recycling-Kunststoffen stellt dabei eine zusätzliche Herausforderung dar.

Haftprimer für Kunststoffoberflächen sind in großer Anzahl bekannt und werden im Markt typischerweise im System zusammen mit den Flüssigkunststoffen - speziell abgestimmt auf bestimmte Kunststoff-Oberflächen - angeboten. Universell einsetzbare Haftprimer sind zwar verfügbar, jedoch müssen bei den handelsüblichen Universal-Haftprimern bisher immer Einschränkungen in Bezug auf die Haftung in Kauf genommen werden.

Insbesondere der Anschluss an unpolare Kunststoffe wie beispielsweise FPO, TPO, EPDM gestaltet sich schwierig. Als Haftprimer oder als Bestandteil von Haftprimern werden hierbei typischerweise chlorierte Polyolefine eingesetzt. Die Herstellung derartiger Produkte wird beispielhaft beschrieben in der WO 2008093228 A1. Entsprechende Formulierungen werden beispielhaft beschrieben in der WO 0238689A1, der WO 2002002703 A1, der DE 4113599 B4 oder der DE 4102241 A1. Dabei ist insbesondere die Kombination von chlorierten Polyolefinen mit Polyisocyanaten vorteilhaft, so wie das in der WO 2007008890 A2 oder der WO 9903907 A1 vorbeschrieben wird. Entsprechende Produkte können unter Baustellenbedingungen eingesetzt werden, aber die Haftung - insbesondere auf unpolaren Kunststoffen und Kunststoffen mit Recycling-Anteil - ist weiter verbesserungsbedürftig, da es immer wieder zu Reklamationen wegen Undichtigkeit in den Anschlussbereichen kommt.

Die Kombination von chlorierten Polyolefinen mit Polyisocyanaten konnte zwischenzeitlich auch auf das wässrige Medium übertragen werden, so wie das in der DE 4428382 A1 beschrieben wird. Aber derartige wässrige 2-Komponenten-Primer sind unter Baustellenbedingungen bei wechselnden Witterungsbedingungen nur sehr eingeschränkt einsetzbar, wobei auch die kurze Verarbeitungszeit problematisch ist.

Ferner sind die EP 3 851 468 A1, die EASTMAN CHEMICAL COMPANY: Eastman CP730-1 chlorinated polyolefin adhesion promoter. Kingsport, TN, 2014. - Firmenschrift, die JP 2019 - 35 067 A sowie die US 5 453 300 A bekannt.

Zusammenfassend lässt sich feststellen, dass ein großer Bedarf für verbesserte Universal-Haftprimer zur Herstellung eines dauerhaften und kraft-schlüssigen Verbundes zwischen Flüssigkunststoffen einerseits und den o.g. Kunststoffen im Baubereich zur direkten Verwendung an der Baustelle besteht.

Diese Aufgabe wird mit der Bereitstellung der nachstehend beschriebenen 2-Komponenten-Haftprimer zur Kombination mit Flüssigkunststoffen gelöst. Vorteilhafte technische Varianten bilden den Gegenstand der jeweiligen Unteransprüche.

Gegenstand der vorliegenden Erfindung sind 2-Komponenten-Haftprimer zur Kombination mit Flüssigkunststoffen im Baubereich enthaltend
A1) mindestens ein freie Isocyanatgruppen aufweisendes Prepolymer mit einem Gehalt an aliphatisch gebundenen NCO-Gruppen von 7,0 bis 18 Gew. -%, erhältlich durch Umsetzung von aliphatischen Di- oder Polyisocyanaten mit mindestens einem durch Alkoxylierung hydroxyfunktioneller Startermoleküle erhältlichen Polyoxyalkylenpolyol mit einer mittleren Hydroxyfunktionalität von 1,5 bis 4 und einem Äquivalentgewicht von mindestens 400 g/Mol
A2) mindestens ein chloriertes Polyolefin -CPO- mit einem Chlorgehalt von 10 bis 45 Gew% bezogen auf das Gesamtgewicht CPO
A3) mindestens ein organisches Lösungsmittel enthaltend aromatische Kohlenwasserstoffe und/oder Ester
   sowie gegebenenfalls
A4) weitere aus der Lacktechnologie bekannte Hilfs-, Zusatz-, Farb- und Bindemittel.

Der Erfindung liegt die überraschende Beobachtung zugrunde, dass sich durch Kombination von speziellen Polyether-modifizierten Polyisocyanaten mit chlorierten Polyolefinen 2-Komponenten-Haftprimer herstellen lassen, die eine ausgezeichnete Haftung sowohl auf polaren als auch auf unpolaren Kunststoff-Oberflächen - insbesondere auch solchen mit Recyclinganteil - vermitteln.

Erfindungsgemäß einsetzbare Isocyanatgruppen aufweisende Prepolymere A1 sind gekennzeichnet durch einen NCO-Gehalt von 7 bis 18 Gew. -%, vorzugsweise 7,5 bis 15 Gew. -%, besonders bevorzugt 8 bis 12 Gew.-% und sind erhältlich durch Umsetzung mindestens eines Polyisocyanats mit einem oder mehreren Polyetherpolyolen, die durch Alkoxylierung von hydroxyfunktionellen Starterverbindungen mit Gemischen aus Propylenoxid und Ethylenoxid unter Zuhilfenahme von Katalysatoren wie beispielsweise basischen Katalysatoren wie Alkalihydroxiden oder auch sog. DMC-Katalysatoren, wie sie in der EP-A 700 949, EP-A 761 708 und WO 97/40086 offenbart werden, erhältlich sind. Einsetzbare Polyether bzw. Polyethermischungen besitzen eine mittlere Hydroxyfunktionalität von 1,5 bis 4, bevorzugt 1,8 bis 2,5 und ein Äquivalentgewicht von mindestens 400 g/Mol, bevorzugt 500 bis 4000 g/Mol, besonders bevorzugt 700 bis 2000g/Mol.

Als Polyisocyanate zur Herstellung der Isocyanatgruppen aufweisenden Prepolymere (i) kommen aliphatische und cycloaliphatische Polyisocyanate der bekannten Art in Betracht: Beispielhaft genannt seien 4,4'-Diisocyanatodicyclohexylmethan, 3-Isocyanatomethyl- 3,3, 5-trimethylcyclohexylisocyanat (Isophorondiisocyanat = IPDI), Hexamethylendiisocyanat (HDI), 2- 2,2, 4-Trimethylhexamethylendiisocyanat (THDI) und a, a, a', a'-Tetramethyl-m-xylylen-diisocyanat oder a, a, a', a'- Tetramethyl-p-xylylen-diisocyanat (TMXDI) sowie aus diesen Verbindungen bestehende Gemische.

Zur Herstellung der Isocyanatgruppen aufweisenden Prepolymere werden das Polyisocyanat und das Polyoxyalkylenpolyol oder Gemische daraus unter Einhaltung eines NCO/OH Äquivalentverhältnisses von 1,5 : 1 bis 10 : 1 unter Urethanbildung umgesetzt. Die Umsetzung findet statt bei Temperaturen von 40° bis 140° C, vorzugsweise 50° bis 110° C. Bei Verwendung eines Überschusses an Polyisocyanat von mehr als 2 : 1 wird überschüssiges monomeres Polyisocyanat nach der Umsetzung durch in der Technik übliche destillative oder extraktive Verfahren, z. B. durch Dünnschichtdestillation entfernt.

Die so erhältlichen Isocyanatgruppen aufweisenden Prepolymere besitzen einen Gehalt an freien Isocyanatgruppen, der für die erfindungsgemäße Verwendung häufig zu niedrig ist. Deshalb müssen die so hergestellten Isocyanatgruppen aufweisenden Prepolymere mit niedrigviskosen Polyisocyanaten, vorzugsweise Polyisocyanaten auf Basis von Hexamethylendiisocyanat abgemischt werden, damit sie den oben gemachten Angaben bezüglich des NCO-Gehaltes entsprechen. Derartige niedrigviskose Polyisocyanate werden mit Hilfe geeigneter Modifizierungsreaktionen, wie z. B. Dimerisierung, Trimerisierung, Biuretisierung, Allophanatisierung und/oder Urethanisierung hergestellt, wobei überschüssiges monomeres Diisocyanat anschließend destillativ aus dem Gemisch entfernt wird, wodurch die Polyisocyanate Restgehalte an monomerem Diisocyanat von <0,5% bez. auf das Gesamtgemisch der Polyisocyanatmischung enthalten (siehe dazu auch: Laas et al "J. Prakt. Chem, 336, 1 94, 185-200 und Nachrichten aus der Chemie, 55, 380-384, 2007). Bevorzugt einsetzbar sind Isocyanuratgruppen aufweisende Polyisocyanate, wie sie z.B. in der US-PS 3 001 973, in den DE-PS 1 022 789, 1 222 067 und 1 027 394 sowie in den DE-OS 1 929 034 und 2 004 048 beschrieben werden und/oder Allophanatgruppen aufweisende Polyisocyanate, wie sie z.B. in der GB-PS 994 890, in der BE-PS 761 626 und in der NL-OS 7 102 524 beschrieben werden. Besonders bevorzugt einsetzbar sind Allophanatgruppen und/oder Isocyanuratgruppen aufweisende Polyisocyanate auf Basis von Hexamethylendiisocyanat, die den oben gemachten Angaben entsprechen und darüber hinaus durch einen Gehalt an Isocyanatgruppen (NCO-Gehalt) von 17-23% und eine mittlere Isocyanatfunktionalität von 2,5 bis 3,3 gekennzeichnet sind.

Besonders bevorzugt ist die Verwendung von Isocyanatgruppen aufweisenden Prepolymeren, die durch direkte Umsetzung der oben beschriebenen Polyetherpolyole mit den vorstehend beschriebenen Polyisocyanaten auf Basis von Hexamethylendiisocyanat erhalten werden. So können in einem einzigen Reaktionsschritt Isocyanatgruppen aufweisende Prepolymere hergestellt werden, die den vorstehend gemachten Angaben entsprechen und im Sinne der Erfindung besonders bevorzugt einsetzbar sind.

Die Umsetzung kann beschleunigt werden durch Verwendung von Katalysatoren, die die Urethanbildung beschleunigen. Die Mitverwendung derartiger Katalysatoren ist jedoch weniger bevorzugt. Erfindungsgemäß als Komponente A1 einsetzbare Isocyanatgruppen aufweisende Prepolymere weisen bevorzugt einen Restgehalt an Diisocyanat-Restmonomeren von weniger als 0,1 Gew% auf, besonders bevorzugt weniger als 0,05 Gew%.

Erfindungsgemäß als Komponente A2 einsetzbare chlorierte Polyolefine -CPO- sind chlorierte Polymerisate der allgemeinen Struktur (-CH-CR¹R²)n , in der R¹ für Wasserstoff steht und R² für Wasserstoff, eine geradkettige oder verzweigte gesättigte aliphatische bzw. cycloaliphatische Gruppe. Konkrete derartige Polyolefine sind Polyethylen, Polypropylen, Polybutylen, Polyisobuten, Polyhexen, Polyocten, Polydecen und Polyoctadecen sowie entsprechende Copolymerisate. Chlorierte Polyolefine werden erhalten durch Chlorierung dieser Polymerisate. Erfindungsgemäß als Komponente A2 einsetzbare CPO's sind gekennzeichnet durch einen Chlorgehalt von 10 bis 45 Gew.-%, besonders bevorzugt von 15 bis 27 Gew.-%, ganz besonders bevorzugt von 15 bis 20 Gew.-%, jeweils bezogen auf den Festkörper der chlorierten Polyolefine. Bevorzugt weisen die eingesetzten Polyolefine ein zahlenmittleres Molekulargewicht von 7.000 bis 200.000, besonders bevorzugt von 8.000 bis 50.000 auf.

Beispiele für bevorzugt als Komponente A2 einsetzbare CPO's sind chloriertes Polyethylen, chloriertes Polypropylen, chlorierte Polyethylen/Polypropylen-Copolymerisate oder Mischungen der genannten CPO's. Bevorzugt als Komponente A2 einsetzbar sind modifizierte chlorierte Polyethylen-, Polypropylen oder Polyethylen/Polypropylen Copolymere. Besonders bevorzugt einsetzbar sind Polyethylen/Polypropylen Copolymere mit Maleinsäure und/oder Maleinsäureanhydrid.

Als Komponente A3 enthalten die erfindungsgemäßen Haftprimer mindestens ein organisches Lösungsmittel ausgewählt aus der Gruppe der aromatischen Kohlenwasserstoffe oder der Ester. Beispiele für aromatische Kohlenwasserstoffe derartige sind Toluol, Xylol oder Ethylbenzol sowie technische aromatische Kohlenwasserstoffgemische mit einem Siedebereich zwischen 155 und 295°C, die beispielsweise unter dem Handelsnamen Solvesso^{®} oder Shellsol^{®} vertrieben werden. Als Ester können die als Lacklösemittel allgemein bekannten Ester erfindungsgemäß eingesetzt werden, wie beispielsweise Ethylacetat, Butylacetat, Methoxypropylacetat, Isobutylacetat, Isopropylacetat oder auch dibasische Ester wie Adipinsäuredimethylester, Glutarsäuredimethylester oder Bernsteinsäuredimethylester.

Die aromatischen Kohlenwasserstoffe und/oder die Ester können dabei alleine oder als Gemisch eingesetzt werden, gegebenenfalls in Kombination mit anderen Lösemitteln der allgemein bekannten Art wie beispielsweise entaromatisierte Lack- und Testbenzine, die aliphatische und cycloaliphatische Kohlenwasserstoffe enthalten.

Gegebenenfalls können die erfindungsgemäßen 2-Komponenten-Haftprimer weitere aus der Lack- und Beschichtungstechnologie übliche Hilfs-, Zusatz-, Farb- und Bindemittel als Komponente A4 enthalten. Dies sind als Bindemittel neben nichtfunktionellen Lackbindemitteln insbesondere die aus der 2-Komponenten-Polyurethan-Beschichtungstechnologie bekannten Polyole wie Polyetherpolyole, Polyacrylatpolyole oder Polyester-Polyole oder Polyasparaginsäureester der in der EP 3115388 A1 und der dort zitierten Sekundärliteratur beschriebenen Art. Polyole und Polyasparaginsäureester reagieren mit der Isocyanatkomponente A1 und müssen in die Komponente A2 eingemischt werden, in der Regel zusammen mit der Komponente A3. Polyole und Polyasparaginsäureester können im Rahmen der Komponente A4 natürlich auch im Gemisch eingesetzt werden.

Im Rahmen der gegebenenfalls als Komponente A4 einzusetzenden Hilfs- und Zusatzmittel seien die aus der Lacktechnologie allgemein bekannten Farbmittel, Füllstoffe, Pigmente, Entlüftungsmittel, Entschäumer, Katalysatoren, Alterungsschutzmittel, Verlaufshilfsmittel und Flammschutzmittel genannt, welche der Komponente A1 und/oder der Komponente A2 zugesetzt werden können.

Zur Herstellung der erfindungsgemäßen 2-Komponenten-Haftprimer werden die Komponenten A1 und A2 getrennt voneinander mit den Lösungsmitteln der Komponente A3 vorgemischt und bezüglich Festkörpergehalt, Farbe und Viskosität - gegebenenfalls durch Zusatz der Komponente A4 - eingestellt. Typischerweise wird dabei die Menge der Lösungsmittel A3 so auf die Komponenten A1 und A2 aufgeteilt, dass ein Mischungsverhältnis der Komponenten von ca. 1:1 resultiert.

In einer Variante der vorliegenden Erfindung werden die jeweiligen Komponenten des 2-Komponenten Haftprimers enthaltend die Komponenten A1 und A3 beziehungsweise A2 und A3 in jeweils einem separaten Gebinde, getrennt voneinander gelagert. Durch Vereinigung der beiden Komponenten und anschließendem Vermischen wird die Primerformulierung gebrauchsfertig.

In einer weiteren Variante der vorliegenden Erfindung werden die beiden Komponenten des 2-Komponenten Haftprimers enthaltend die Komponenten A1 und A3 beziehungsweise A2 und A3 in ein spezielles 2-Kammer Mischgefäß eingebracht, in dem die beiden Komponenten unmittelbar vor der Anwendung zusammengebracht werden können -z.B. durch Zerstörung einer Trennmembran- und durch Schütteln miteinander vermischt werden.

Die beiden Komponenten werden unmittelbar vor der Verarbeitung vermischt, haben eine Verarbeitungszeit von mehreren Stunden und werden durch Streichen oder Rollen auf den gereinigten Untergrund aufgebracht. Im Rahmen der Erfindung hat sich gezeigt, dass zum Erreichen eines kraftschlüssigen Verbundes lediglich eine gründliche Voreinigung des Untergrundes erforderlich ist, nicht aber das Anschleifen des Untergrundes.

Die 2-Komponenten-Haftprimer können universell auf Kunststoff-Oberflächen eingesetzt werden, aber auch auf metallischen Oberflächen. Als Kunststoffoberflächen, die im Baubereich häufig anzutreffen sind, seien Kunststoff-Abdichtungsbahnen genannt wie beispielsweise flexibilisierte Polyolefinbahnen wie FPO oder TPO-Bahnen, Abdichtungsbahnen auf Basis von weichgemachtem Polyvinylchlorid (PVC), Kunststoffbahnen auf Basis von Ethylencopolymerisat-Bitumen ECB, elastomere Kunststoffbahnen auf Basis von EPDM (Ethylen-Propylen-Dien-Kautschuk) EVA (Ethylen-Vinylacetat-Copolymer), NBR (Acrylnitril-Butadien-Kautschuk), CSM (chlorsulfoniertes Polyethylen) sowie Kunststoffprofile aus PVC, ABS (Acrylnitril-Butadien-Styrol), Polypropylen, Polycarbonat, PMMA (Polymethylmethacrylat) oder TPE (Thermoplastische Elastomere) wie TPA, TPU, TPC oder TPS.

Weiterhin geeignete Oberflächen zur Behandlung mit dem erfindungsgemäßen 2-Komponenten-Haftprimer sind kunststoffmodifizierte Bitumen Abdichtungsbahnen, insbesondere SBS (Styrol-Butadien-Styrol) modifizierte Bitumenbahnen oder APP (ataktisches Polypropylen) modifizierte Bitumenbahnen. Weiterhin geeignete Oberflächen zur Behandlung mit dem erfindungsgemäßen 2-Komponenten-Haftprimer sind metallische Oberflächen wie Kupfer, Zink, Zinn, Aluminium, Eisen oder Stahl sowie Legierungen mit den genannten Metallen.

Die mit dem 2-Komponenten-Haftprimer beschichteten Oberflächen trocknen physikalisch vergleichsweise schnell und können nach relativ kurzer Zeit - typischerweise nach 15 bis 30 Minuten- mit Flüssigkunststoffen überarbeitet werden. Dies sind die allgemein bekannten Flüssigkunststoffe wie sie in der EOTA-Leitlinie ETAG Nr. 005 (Leitlinie für die europäische Technische Zulassung für flüssig aufzubringende Dachabdichtungen) genauer spezifiziert sind. Geeignete Flüssigkunststoffe sind neben wässrigen Abdichtungsprodukten wie sie beispielsweise in der WO2022248070 A1 beschrieben werden insbesondere 1-Komponenten- und 2-Komponenten-Polyurethansysteme, silanisierte Polyurethansysteme aber auch radikalisch härtende ungesättigte Polyesterharze oder Acrylat- (PMMA)-Systeme. Bevorzugt einzusetzen sind Polyurethan-Flüssigkunststoffe, besonders bevorzugt silanterminierte Polyurethan-Flüssigkunststoffe wie sie beispielhaft in der EP 3936553 A1 und der dort zitierten Sekundärliteratur beschrieben werden und 2-Komponenten-Polyurethan-Flüssigkunststoffe auf Basis von aliphatischen Polyisocyanaten und Polyasparaginsäureestern wie sie in der eigenen Patentanmeldung EP 3115388 A1 beschrieben werden. Die Applikation erfolgt dabei typischerweise und besonders bevorzugt in Verbindung mit einer verstärkenden Gewebeeinlage.

Gegenstand der vorliegenden Erfindung ist gemäß einem weiteren Aspekt ein Verfahren zur Abdichtung von Kunststoff-Bahnen, -Profilen oder -Formteilen durch Aufbringen eines Haftprimers und nachfolgend eines gewebearmierten Flüssigkunststoffs, dadurch gekennzeichnet, dass ein 2-Komponenten Haftprimer eingesetzt wird enthaltend mindestens
A1) mindestens ein freie Isocyanatgruppen aufweisendes Prepolymer mit einem Gehalt an aliphatisch gebundenen NCO-Gruppen von 7,0 bis 18 Gew. -%, erhältlich durch Umsetzung von aliphatischen Di- oder Polyisocyanaten mit mindestens einem durch Alkoxylierung hydroxyfunktioneller Startermoleküle erhältlichen Polyoxyalkylenpolyol mit einer mittleren Hydroxyfunktionalität von 1,5 bis 4 und einem Äquivalentgewicht von mindestens 400 g/Mol
A2) mindestens ein chloriertes Polyolefin -CPO- mit einem Chlorgehalt von 10 bis 45 Gew% bezogen auf das Gesamtgewicht CPO
A3) mindestens ein organisches Lösungsmittel enthaltend aromatische Kohlenwasserstoffe und/oder Ester
   sowie gegebenenfalls
A4) weitere aus der Lacktechnologie bekannte Hilfs-, Zusatz-, Farb- und Bindemittel

Das erfindungsgemäße Verfahren deckt die Bereiche der Bauwerksabdichtung nach DIN 18195 und der Dachabdichtung nach DIN 18531 in vollem Umfang ab.

### Ausführungsbeispiele

### Beispiel 1 (Herstellung eines Isocyanatgruppen aufweisenden Prepolymeren, Komponente A1)

2200 g eines handelsüblichen Allophanatgruppen und Isocyanuratgruppen aufweisenden Polyisocyanates auf Basis von Hexamethylendiisocyanat, mit einem NCO-Gehalt von 19 % und einer Viskosität von 290 mPas (23°C) (Basonat HA 3000, Handelsprodukt der Firma BASF SE, Ludwigshafen) werden mit 1800 g eines auf Propylenglykol gestarteten Polypropylenoxidpolyethers vom mittleren Molekulargewicht 2000 bei einer Temperatur von 110°C für 7 Stunden unter Rühren zur Reaktion gebracht. Dabei erhält man eine Polyisocyanatmischung mit einem NCO-Gehalt von 8,5 % und einer Viskosität von 2900 mPas (23°C), Restmonomergehalt an Hexamethylendiisocyanat 0,03 Gew%.

### Beispiel 2 (Herstellung eines Isocyanatgruppen aufweisenden Prepolymeren, Komponente A1)

2200 g eines handelsüblichen Allophanatgruppen und Isocyanuratgruppen aufweisenden Polyisocyanates auf Basis von Hexamethylendiisocyanat, mit einem NCO-Gehalt von 19 % und einer Viskosität von 290 mPas (23°C) (Basonat HA 3000, Handelsprodukt der Firma BASF SE, Ludwigshafen) werden mit 500 g eines auf Propylenglykol gestarteten Polypropylenoxidpolyethers vom mittleren Molekulargewicht 1000 bei einer Temperatur von 110°C für 7 Stunden Stunden unter Rühren zur Reaktion gebracht. Dabei erhält man eine Polyisocyanatmischung mit einem NCO-Gehalt von 13,8 % und einer Viskosität von 2100 mPas (23°C), Restmonomergehalt an Hexamethylendiisocyanat 0,02 Gew%

### Beispiel 3 (Nicht erfindungsgemäß, Polyethergruppen-freies Polyisocyanat, Komponente A1)

Aromatenverträgliches handelsübliches Polyisocyanat, Desmodur N3400 mit einem NCO-Gehalt von 21,5 % und einer Viskosität von 200mPas (23°C) (Handelsprodukt der Fa. Covestro AG, Leverkusen Deutschland), Restmonomergehalt an Hexamethylendiisocyanat 0,35 Gew%

### Beispiel 4 (Chloriertes Polyolefin -CPO-, Komponente A2)

Handelsübliches chloriertes Polyolefin gelöst in Xylol, Trapylen 196 X mit einem Chlorgehalt-Gehalt des Polymers von 26 % (Handelsprodukt der Fa. Tramaco, Tornesch Deutschland)

### Beispiel 5 (Chloriertes Polyolefin -CPO-, Komponente A2)

Handelsübliches Maleinsäureanhydrid modifiziertes chloriertes Polyolefin gelöst in Xylol, Trapylen 112 X mit einem Chlorgehalt-Gehalt des Polymers von 20,5 % (Handelsprodukt der Fa. Tramaco, Tornesch Deutschland)

### Beispiel 6 (Herstellung einer Primer Formulierung)

200g der Komponente A1 aus Beispiel 3 wird durch intensives Rühren mit 800g Xylol (A3) vermischt. Zu 1000g dieser Mischung aus A1 und A3 werden 1000g der Komponenten A2 aus Beispiel 4 hinzugegeben und durch intensives Rühren vermischt.

### Beispiel 7 (Herstellung einer Primer Formulierung)

100g der Komponente A1 aus Beispiel 1 wird durch intensives Rühren mit 900g Xylol (A3) vermischt. Zu 1000g dieser Mischung aus A1 und A3 werden 1000g der Komponenten A2 aus Beispiel 5 hinzugegeben und durch intensives Rühren vermischt.

### Beispiel 8 (Herstellung einer Primer Formulierung)

150g der Komponente A1 aus Beispiel 2 wird durch intensives Rühren mit 750g Xylol (A3) vermischt. Zu 1000g dieser Mischung aus A1 und A3 werden 1000g der Komponenten A2 aus Beispiel 5 hinzugegeben und durch intensives Rühren vermischt.

### Beispiel 9 (Herstellung einer Primer Formulierung)

150g der Komponente A1 aus Beispiel 3 wird durch intensives Rühren mit 750g Xylol (A3) vermischt. Zu 1000g dieser Mischung aus A1 und A3 werden 1000g der Komponenten A2 aus Beispiel 5 hinzugegeben und durch intensives Rühren vermischt.

### Beispielserien 10 bis 17 (Haftungstests auf problematischen Untergründen)

Auf verschiedenen Kunststoffuntergründen werden mit Klebeband Testflächen in der Größe von 15 cm * 7 cm abgeklebt. Mittels Pinsel werden auf diese Testflächen jeweils ca. 0,6g bis 1,0g der Primer-Formulierungen der Beispiele 6 bis 9 gleichmäßig aufgetragen. Nach ca. 30 Minuten werden in diese Testflächen werden jeweils 15g eines handelsüblichen Flüssigkunststoff auf Basis silanterminierter Polyurethane (Frankosil 1K Plus, der Firma Franken Systems, Gollhofen, Deutschland) durch Verteilen mit einem Rakel gleichmäßig eingebracht. In die reagierende Masse wird ein Polyestervlies mit einem Flächengewicht von 110g/m² (Frankolon Vlies, der Firma Franken Systems Gollhofen) eingelegt und vorsichtig angedrückt, so dass die Unterseite gleichmäßig von der reagierenden Masse benetzt ist. Danach werden weitere 15g der reagierenden Masse auf der Oberseite des Vlieses ausgebracht und mit einer Rakel gleichmäßig verteilt. Die durchschnittliche Schichtstärke der so hergestellten vliesarmierten Abdichtung beträgt 2,3 +/- 0,2 mm.

Bewertung der Haftung. Nach einer Härtungszeit von 7 Tagen wird die Haftung der Abdichtung auf den Kunststoffuntergründen bewertet. Die Bewertung der Haftung erfolgt anschließendem Bewertungsschema:

| |
|---|
| ++ = sehr gute Haftung |
| + = gute Haftung |
| 0 = geringe Haftung |
| - = keine Haftung |

| | Beispielserie 10 | Beispielserie 11 | Beispielserie 12 | Beispielserie 13 |
|---|---|---|---|---|
| *Kunststoffbahnen* | Primer. Form. Bsp. 6 | Primer. Form. Bsp. 7 | Primer. Form. Bsp. 8 | Form. Primer. Bsp. 9 |
| BMI Wolfin IB | - | ++ | + | - |
| BMI Wolfin GWSK | - | ++ | 0 | - |
| FIRESTONE Ultra Ply TPO | 0 | ++ | + | 0 |
| FIRESTONE Rubberguard EPDM | + | + | - | + |
| FDT Rhenofol CV | - | ++ | + | - |
| FDT Rhepanol HG | - | ++ | + | - |
| BPA DualProof A | 0 | ++ | 0 | + |
| BPA DualProof C,Typ1 | 0 | ++ | + | 0 |
| SIKA Sikaplan G18, light grey | - | ++ | ++ | - |
| SIKA Sarnafil TG66 | 0 | ++ | + | 0 |

| | Beispielserie 14 | Beispielserie 15 | Beispielserie 16 | Beispielserie 17 |
|---|---|---|---|---|
| *Fensterprofile* | Primer. Form. Bsp. 6 | Primer. Form. Bsp. 7 | Primer. Form. Bsp. 8 | Form. Primer. Bsp. 9 |
| VEKA weiß | - | ++ | 0 | - |
| VEKA anthrazit | - | + | 0 | - |
| REHAU weiß | - | ++ | + | - |
| REHAU Geneo Rau-Fipro X | - | ++ | 0 | - |
| SALAMANDER recycling hellgrau | 0 | ++ | + | 0 |
| SALAMANDER recycling anthrazit | - | ++ | + | - |

### Beispielserien 18 bis 25 (Haftungstests auf problematischen Untergründen)

Auf verschiedenen Kunststoffuntergründen werden mit Klebeband Testflächen in der Größe von 15 cm * 7 cm abgeklebt. Mittels Pinsel werden auf diese Testflächen jeweils ca. 0,6g bis 0,1g der Primer-Formulierungen der Beispiele 6 bis 9 gleichmäßig aufgetragen. Nach ca. 30 Minuten werden in diese Testflächen werden jeweils 15g eines handelsüblichen Flüssigkunststoff auf Polyasparaginsäureester/PolyurethanBasis (Revopur WP200, der Firma Franken Systems, Gollhofen, Deutschland) durch Verteilen mit einem Rakel gleichmäßig eingebracht. In die reagierende Masse wird ein Polyestervlies mit einem Flächengewicht von 110g/m² (Frankolon Vlies, der Firma Franken Systems Gollhofen) eingelegt und vorsichtig angedrückt, so dass die Unterseite gleichmäßig von der reagierenden Masse benetzt ist. Danach werden weitere 15g der reagierenden Masse auf der Oberseite des Vlieses ausgebracht und mit einer Rakel gleichmäßig verteilt. Die durchschnittliche Schichtstärke der so hergestellten vliesarmierten Abdichtung beträgt 2,3 +/- 0,2 mm.

Bewertung der Haftung. Nach einer Härtungszeit von 7 Tagen wird die Haftung der Abdichtung auf den Kunststoffuntergründen bewertet. Die Bewertung der Haftung erfolgt anschließendem Bewertungsschema:

| |
|---|
| ++ = sehr gute Haftung |
| + = gute Haftung |
| 0 = geringe Haftung |
| - = keine Haftung |

| | Beispielserie 18 | Beispielserie 19 | Beispielserie 20 | Beispielserie 21 |
|---|---|---|---|---|
| *Kunststoffbahnen* | Primer. Form. Bsp. 6 | Primer. Form. Bsp. 7 | Primer. Form. Bsp. 8 | Form. Primer. Bsp. 9 |
| BMI Wolfin IB | 0 | ++ | + | 0 |
| BMI Wolfin GWSK | 0 | ++ | 0 | 0 |
| FIRESTONE Ultra Ply TPO | 0 | ++ | + | 0 |
| FIRESTONE Rubberguard EPDM | + | + | - | + |
| FDT Rhenofol CV | - | ++ | + | - |
| FDT Rhepanol HG | - | ++ | + | - |
| BPA DualProof A | 0 | ++ | + | + |
| BPA DualProof C,Typ1 | 0 | + | + | 0 |
| SIKA Sikaplan G18, light grey | - | ++ | ++ | - |
| SIKA Sarnafil TG66 | 0 | ++ | + | 0 |

| | Beispielserie 22 | Beispielserie 23 | Beispielserie 24 | Beispielserie 25 |
|---|---|---|---|---|
| *Fensterprofile* | Primer. Form. Bsp. 6 | Primer. Form. Bsp. 7 | Primer. Form. Bsp. 8 | Form. Primer. Bsp. 9 |
| VEKA weiß | 0 | ++ | + | 0 |
| VEKA anthrazit | - | + | 0 | - |
| REHAU weiß | 0 | ++ | + | 0 |
| REHAU Geneo Rau-Fipro X | 0 | ++ | 0 | - |
| SALAMANDER recycling hellgrau | 0 | ++ | + | 0 |
| SALAMANDER recycling anthrazit | - | ++ | + | - |

### Erläuterungen zu den verwendeten Untergründen der Beispielserien 10 bis 25

| **Kunststoffbahnen** | **Merkmale** | **Chemische Basis** |
|---|---|---|
| BMI Wölfin IB | Einlagige, homogene Dichtbahn. | Polyvinylchlorid (PVC) |
| BMI Wolfin GWSK | Glasvliesverstärkte Dichtbahn mit unterseitiger Kaltselbstklebeschicht. | Polyvinylchlorid (PVC) |
| FIRESTONE Ultra Ply TPO | Dachbahn mit einer Armierung aus Polyestergewebe. | Thermoplastisches Polyolefin (TPO) |
| FIRESTONE Rubberguard EPDM | Einlagige Dachbahn. | Ethylen-Propylen-Dien-Monomer-Kautschuk (EPDM) |
| FDT Rhenofol CV | Dachbahn mit Verstärkung aus Polyestergewebe. | Polyvinylchlorid (PVC) |
| FDT Rhepanol HG | Glasvlieseinlageverstärkte Abdichtungsbahn. | Polyisobutylen (PIB) |
| BPA DualProof A | Polypropylen-Vlies kaschierte Abdichtungsbahn. | Thermoplastisches Polyolefin/flexibles Polyolefin (TPO/FPO) |
| BPA DualProof C | Polypropylen-Vlies kaschierte Abdichtungsbahn. | Polyvinylchlorid (PVC) |
| SIKA Sikaplan G18, light grey | Mehrschichtige Abdichtungsbahn mit innenliegendem Polyestergewebe. | Polyvinylchlorid (PVC) |
| SIKA Sarnafil TG66 | Mehrschichtige Abdichtungsbahn mit innenliegender Verstärkung aus Glasvlies. | flexibles Polyolefin (FPO) |

| Fensterprofile **- Hart PVC** | **Merkmale** | **Chemische Basis** |
|---|---|---|
| VEKA weiß | Kunststoffprofil weiß. | Polyvinylchlorid (PVC/Hart-PVC) |
| VEKA anthrazit | Kunststoffprofil foliert mit Holzfaserstruktur. | Polyvinylchlorid (PVC/Hart-PVC) |
| REHAU weiß | Kunststoffprofil weiß. | Polyvinylchlorid (PVC/Hart-PVC) |
| REHAU Geneo Rau-Fipro X | Kunststoffprofil anthrazit Glasfaserverstärkt. | Polyvinylchlorid (PVC/Hart-PVC) |
| SALAMANDER recycling hellgrau | Kunststoffprofil Recycling-Material. | Polyvinylchlorid (PVC/Hart-PVC) |
| SALAMANDER recycling anthrazit | Kunststoffprofil Recycling-Material. | Polyvinylchlorid (PVC/Hart-PVC) |

## Patentansprüche

1. 2-Komponenten-Haftprimer zur Kombination mit Flüssigkunststoffen im Baubereich enthaltend mindestens
A1) mindestens ein freie Isocyanatgruppen aufweisendes Prepolymer mit einem Gehalt an aliphatisch gebundenen NCO-Gruppen von 7,0 bis 18 Gew. -%, erhältlich durch Umsetzung von aliphatischen Di- oder Polyisocyanaten mit mindestens einem durch Alkoxylierung hydroxyfunktioneller Startermoleküle erhältlichen Polyoxyalkylenpolyol mit einer mittleren Hydroxyfunktionalität von 1,5 bis 4 und einem Äquivalentgewicht von mindestens 400 g/Mol
A2) mindestens ein chloriertes Polyolefin -CPO- mit einem Chlorgehalt von 10 bis 45 Gew% bezogen auf das Gesamtgewicht CPO
A3) mindestens ein organisches Lösungsmittel enthaltend aromatische Kohlenwasserstoffe und/oder Ester.

2. 2-Komponenten Haftprimer gemäß Anspruch 1, **dadurch gekennzeichnet, dass** das Isocyanatgruppen aufweisende Prepolymer A1 einen Gehalt an aliphatisch gebundenen NCO-Gruppen von 8 bis 12 Gew% aufweist bezogen auf das Gesamtgewicht der Komponente A1.

3. 2-Komponenten Haftprimer gemäß Anspruch 1 oder 2, **dadurch gekennzeichnet, dass** das Isocyanatgruppen aufweisende Prepolymer A1 einen Restgehalt an Diisocyanat-Restmonomeren von weniger als 0,1% Gew% aufweist bezogen auf das Gesamtgewicht der Komponente A1.

4. 2-Komponenten Haftprimer gemäß einem oder mehreren der Ansprüche 1 bis 3, **dadurch gekennzeichnet, dass** die Komponente A2 einen Chlorgehalt von 15 bis 27 Gew% bezogen auf das Gesamtgewicht der Komponente A2 aufweist.

5. 2-Komponenten Haftprimer gemäß einem oder mehreren der Ansprüche 1 bis 4, **dadurch gekennzeichnet, dass** die Komponente A2 ein zahlenmittleres Molekulargewicht von 8.000 bis 50.000 aufweist.

6. Verfahren zur Abdichtung von Kunststoff-Bahnen, -Profilen oder -Formteilen, umfassten die Schritte
I) Bereitstellen von Kunststoff-Bahnen, -Profilen oder -Formteilen;
II) Aufbringen von 2-Komponenten Haftprimer enthaltend mindestens
A1) mindestens ein freie Isocyanatgruppen aufweisendes Prepolymer mit einem Gehalt an aliphatisch gebundenen NCO-Gruppen von 7,0 bis 18 Gew. -%, erhältlich durch Umsetzung von aliphatischen Di- oder Polyisocyanaten mit mindestens einem durch Alkoxylierung hydroxyfunktioneller Startermoleküle erhältlichen Polyoxyalkylenpolyol mit einer mittleren Hydroxyfunktionalität von 1,5 bis 4 und einem Äquivalentgewicht von mindestens 400 g/Mol
A2) mindestens ein chloriertes Polyolefin -CPO- mit einem Chlorgehalt von 10 bis 45 Gew% bezogen auf das Gesamtgewicht CPO
A3) mindestens ein organisches Lösungsmittel enthaltend aromatische Kohlenwasserstoffe und/oder Ester
III) Aufbringen eines eines gewebearmierten Flüssigkunststoffs

7. Verfahren zur Abdichtung von Kunststoff-Bahnen, -Profilen oder -Formteilen gemäß Anspruch 6, **dadurch gekennzeichnet, dass** mindestens ein Flüssigkunststoff auf Basis silanterminierter Polyurethane eingesetzt wird.

8. Verfahren zur Abdichtung von Kunststoff-Bahnen, -Profilen oder -Formteilen gemäß Anspruch 6, **dadurch gekennzeichnet, dass** mindestens ein 2-Komponenten-Polyurethan-Flüssigkunststoffe auf Basis von aliphatischen Polyisocyanaten und Asparaginsäureestern eingesetzt wird.

9. 2-Kammer Mischgefäß aus Metall enthaltend einen 2-Komponenten-Haftprimer gemäß Anspruch 1 bis 5.
